(19) Europäisches Patentamt / European Patent Office / Office européen des brevets

(11) **EP 3 074 458 B1**

(12) **EUROPEAN PATENT SPECIFICATION**

(45) Date of publication and mention of the grant of the patent:
**09.06.2021 Bulletin 2021/23**

(21) Application number: **14824099.7**

(22) Date of filing: **25.11.2014**

(51) Int Cl.:
*C08K 3/08* (2006.01)  *C08K 3/01* (2018.01)
*C08K 3/22* (2006.01)  *C08K 3/00* (2018.01)
*C08L 69/00* (2006.01)  *C23C 18/16* (2006.01)
*C23C 18/20* (2006.01)  *C23C 18/38* (2006.01)
*C08K 3/32* (2006.01)

(86) International application number:
**PCT/IB2014/066334**

(87) International publication number:
**WO 2015/079385 (04.06.2015 Gazette 2015/22)**

(54) **HIGH MODULUS LASER DIRECT STRUCTURING POLYCARBONATE COMPOSITES WITH ENHANCED PLATING PERFORMANCE AND BROAD LASER WINDOW BY REFLECTION ADDITIVES**

POLYCARBONATKOMPOSITE MIT HOHEM MODULUS FÜR LASER-DIREKT-STRUKTURIERUNG MIT VERBESSERTER PLATTIERUNGSLEISTUNG UND BREITEM LASERFENSTER MIT HILFE VON REFLEXIONZUSATZSTOFFEN

COMPOSITES DE POLYCARBONATE À MODULE ÉLEVÉ ET DE STRUCTURATION DIRECTE PAR LASER AVEC UNE PERFORMANCE DE PLACAGE RENFORCÉE ET UNE LARGE FENÊTRE LASER GRÂCE À DES ADDITIFS DE REFLEXION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.11.2013 US 201361909439 P**

(43) Date of publication of application:
**05.10.2016 Bulletin 2016/40**

(73) Proprietor: **SHPP Global Technologies B.V.**
**4612 PX Bergen op Zoom (NL)**

(72) Inventors:
• **CHENG, Yunan**
  **Shanghai 201319 (CN)**
• **LIAN, Xueming**
  **Shanghai 201601 (CN)**
• **AN, Yuxian**
  **Shanghai 201319 (CN)**
• **ZHENG, Yun**
  **Pudong, Shanghai 201315 (CN)**
• **WANG, Jiwen**
  **Shanghai 200062 (CN)**

(74) Representative: **Elzaburu S.L.P.**
  **Miguel Angel 21, 2nd floor**
  **28010 Madrid (ES)**

(56) References cited:
**EP-A1- 2 998 361**      **US-A1- 2012 279 764**
**US-A1- 2013 168 133**

• **DATABASE WPI Week 201376 Thomson Scientific, London, GB; AN 2013-H44408 XP002736555, & CN 102 911 491 A (DENG W) 6 February 2013 (2013-02-06)**

Remarks:
The file contains technical information submitted after the application was filed and not included in this specification

**Description**

BACKGROUND

Laser-supported or directed structuring process (LDS) for three-dimensional (3D) molded injection devices (MID) provides a simplified manufacturing process. For example, the LDS process allows for antenna structures to be directly and cost effectively integrated into the cell phone housing. Due to different chemical plating solutions and conditions used, however, the plating performance of conventional LDS materials can vary (e.g., plating rate and adhesion of plating layers). US2013/0168133 describes a process for producing a circuit carrier, including providing a moulded part containing a thermoplastic composition including a) a thermoplastic resin and b) a laser direct structuring additive in an amount of at least 1 wt % with respect to the weight of the total composition, the laser direct structuring additive containing tin or copper comprising antimony-doped tin oxide and having a CIELab colour value L* of at least 45 and irradiating areas of the part on which conductive tracks are to be formed with laser radiation, and subsequently metalizing the irradiated areas.

Accordingly, it would be beneficial to provide an LDS polymer composition having good plating performance while maintaining good mechanical performance. SUMMARY In accordance with the purpose of the invention, as embodied and broadly described herein, the invention, in one aspect, relates to a polymer composition comprising a polycarbonate polymer and a laser direct structuring additive comprising a copper salt, said laser direct structuring additive being capable of being activated by an electromagnetic radiation and thereby forming elemental metal nuclei, a reflection additive, wherein the polymer composition is capable of being plated after being activated using a laser, and a reinforcing filler comprising a flat glass fiber present in an amount in the range from 10 weight % to 50 weight % relative to the total weight of the polymer composition, and wherein the combined weight percent value of all components is 100.

Also disclosed is a method comprising forming a polymer composition comprising a polycarbonate polymer, a laser direct structuring additive comprising a copper salt, a reflection additive, and a reinforcing filler comprising a flat glass fiber present in an amount in the range from 10 weight % to 50 weight % relative to the total weight of the polymer composition, and activating a surface of the formed polymer composition using a laser to release at least one elemental metal nucleus and plating the polymer composition after being activated using a laser, wherein the polymer composition is capable of having a plating index value with a statistical variance of at least 55 % to 85 % lower than that measured for a substantially identical reference composition in the absence of the reflection additive.

Also disclosed is an article molded from a polymer composition comprising a polycarbonate polymer and a laser direct structuring additive comprising a copper salt, said laser direct structuring additive being capable of being activated by an electromagnetic radiation and thereby forming elemental metal nuclei.

BRIEF DESCRIPTION OF THE DRAWINGS

The accompanying drawings, which are incorporated in and constitute a part of this specification, illustrate exemplary aspects and together with the description, serve to explain the principles of the compositions, methods and systems disclosed herein.

Figure 1 shows the reflectance of reflection additives at changing light wavelengths.
Figure 2 shows plating index values measured for LDS polycarbonate composites, with and without reflection additives. Solid circles indicate the mean plating index values.
Figure 3 shows plating index values measured for LDS polycarbonate composites, without and with a reflection additive of different concentrations. Solid circles indicate the mean plating index values.

DETAILED DESCRIPTION

The present invention can be understood more readily by reference to the following detailed description, examples, drawings, and claims, and their previous and following description. However, before the present compositions, articles, devices, systems, and/or methods are disclosed and described, it is to be understood that this invention is not limited to the specific compositions, articles, devices, systems, and/or methods disclosed unless otherwise specified, as such can, of course, vary. It is also to be understood that the terminology used herein is for the purpose of describing particular aspects only and is not intended to be limiting.

It is to be understood that unless otherwise expressly stated, it is in no way intended that any method set forth herein be construed as requiring that its steps be performed in a specific order.

It is also to be understood that the terminology used herein is for the purpose of describing particular aspects only and is not intended to be limiting. As used in the specification and in the claims, the term "comprising" may include the aspects "consisting of' and "consisting essentially of." Unless defined otherwise, all technical and scientific terms used herein have the same meaning as commonly understood by one of ordinary skill in the art to which this invention belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polycarbonate" includes mixtures of two or more such polycarbonates. Furthermore, for example, reference to a filler includes mixtures of two or more such fillers.

When a range is recited, it is understood that each unit between two particular units are also disclosed.

As used herein, the terms "optional" or "optionally" mean that the subsequently described event, condition, component, or circumstance may or may not occur, and that the description includes instances where the event or circumstance does or does not occurs.

Unless specified to the contrary herein, all test standards are the most recent standard in effect at the time of filing this application.

Disclosed are component materials to be used to prepare disclosed compositions of the invention as well as the compositions themselves to be used within methods disclosed herein. It is understood that when combinations, subsets, interactions, groups, etc. of materials are disclosed that while specific reference of each various individual and collective combinations and permutation of these compounds cannot be explicitly disclosed, each is specifically contemplated and described herein.

When a range of values is recited, the disclosure includes all combination of those numbers including end values and intermediate values.

As used herein, the terms "polydispersity index" or "PDI" can be used interchangeably, and are defined by the formula:

$$PDI = \frac{M_w}{M_n}.$$

The PDI has a value equal to or greater than 1, but as the polymer chains approach uniform chain length, the PDI approaches unity.

The terms "residues" and "structural units", used in reference to the constituents of the polymers, are synonymous throughout the specification.

Any test method disclosed herein, unless stated otherwise, is the most recent at the time of filing of this application.

The disclosure provides an improved polymer composition that is useful in connection with laser direct structuring technology and provides an enhanced plating performance while exhibiting relatively good mechanical properties. In some embodiments, the disclosed polymer composition generally comprises a polycarbonate polymer; a laser direct structuring additive; a reinforcing filler; and a reflection additive; and wherein the polymer composition is capable of being plated after being activated using a laser.

Robustness of plating performance can be measured via a performance ranking, or plating ranking, ranging from top performance to bottom performance. The ranking can be partitioned in various levels. In one aspect, a plating ranking can have a level of "10" for top performance and a level of "0" for bottom performance.

According certain aspects, a molded article formed from the disclosed polymer composition can exhibit a notched Izod impact energy at 23°C of at least about 70 joules per meter (J/m) (measured by ASTM D256). In further aspects, a molded article formed from a disclosed polymer composition can exhibit a notched Izod impact energy at 23 degrees Celsius (°C) in the range from about 75 J/m to about 165 J/m, including exemplary values of about each numeral between 75 J/m and 165 J/m. In still further aspects, a molded article formed from a disclosed polymer composition can exhibit a notched Izod impact energy at 23°C in any range derived from any two values set forth above, or intermediate values thereto. For example, a molded article formed from a polymer composition can exhibit a notched Izod impact energy at 23 °C in the range of from about 75 J/m to about 110 J/m.

According to aspects of the disclosure, a molded article or sample formed from the disclosed polymer composition can exhibit an unnotched Izod impact energy at 23°C of at least about 400 J/m. In further aspects, a molded article formed from a disclosed polymer composition can exhibit an unnotched Izod impact energy at 23°C in the range from about 470 J/m to about 750 J/m, including exemplary values of about each numeral between 470 and 750 J/m. For example, a molded article formed from a polymer composition can exhibit an unnotched Izod impact energy at 23°C in the range of from about 400 J/m to about 550 J/m.

According to aspects of the disclosure, a molded article or sample formed from the disclosed polymer composition can exhibit improved tensile modulus. In one aspect, the tensile modulus can be in the range of from about 3.0 gigapascals (GPa) to about 10.0 GPa (measured by ASTM D 638). In a further aspect of the disclosure, a molded article formed from the disclosed polymer composition exhibits tensile modulus in an amount equal to or greater than about 3 GPa. In yet another aspect, a molded article formed from the disclosed polymer composition exhibits tensile modulus of about 3 GPa to about 10 GPa, including exemplary values of about each 0.1 units between 3 and 10 GPa. For example, the tensile modulus can be in the range of from about 7.0 GPa to about 9.0 GPa. In a still further aspect, the tensile modulus can be in the range of from about 7.1 GPa to about 8.9 GPa.

According to aspects of the disclosure, a molded article or sample formed from the disclosed polymer composition can exhibit improved tensile strength. For example, the tensile strength can be in the range of from about 70 megapascals (MPa) to about 115 MPa (measured by ASTM D 638), including exemplary tensile strengths of about each numeral between 70 MPa and 155 MPa. For example, the tensile strength can be in the range of from about 80 MPa to about 115 MPa. In a further aspect, the tensile strength can be in the range of from about 90 MPa to about 110 MPa.

In still further aspects, a molded article or sample formed from the disclosed polymer composition can exhibit desirable values of tensile elongation. For example, according to aspects, a molded article or sample formed from the disclosed polymer composition can exhibit an elongation at break in the range of from about 0.1 percent (%) to about 10% (measured by ASTM D 638), including exemplary values of about 0.1 units between 0.1% and 10%. For example, the tensile elongation can be in the range of from about 1 % to about 5 %. In a further aspect, the tensile elongation can be in the range of from about 1 % to about 3 %.

According to aspects of the disclosure, a molded article or sample formed from the disclosed polymer composition can exhibit an improved flexural modulus. In one aspect, the flexural modulus can be in greater than about 3.0 GPa. In another aspect, a molded article formed from the disclosed polymer composition exhibits a flexural modulus of at least about 3 GPa to about 10 GPa (measured by ASTM D 790), including exemplary values of about every 0.1 units between 3 GPa and 10 GPa. For example, the flexural modulus can be in the range of from about 6.0 GPa to about 9.0 GPa in the range of from about 6.0 GPa to about 8.0 GPa.

According to aspects of the disclosure, a molded article formed from the disclosed polymer composition can exhibit an improved flexural strength. For example, the flexural strength can be in the range of from about 120 MPa to about 180 MPa, including exemplary flexural strengths of every numeral between 120 MPa and 180 MPa. For example, the tensile strength can be in the range of from about 130 MPa to about 170 MPa. In another aspect, the flexural strength can be in the range of from about 130 MPa to about 160 MPa.

In still further aspects, a molded article formed from the disclosed polymer composition can exhibit desirable heat deflection temperature (HDT). For example, a molded article formed from a disclosed polymer composition can exhibit a heat deflection temperature in the range of from about 120°C to about 140°C (measured by ASTM D 648). In another aspect, a molded article formed from a disclosed polymer composition can exhibit a heat deflection temperature in the range of from about 120°C to about 140°C, including exemplary heat deflection temperature values of about every numeral between 120°C and 140°C. For example, the HDT can be in the range of from 120°C to 130°C.

In yet further aspects, a molded article formed from the disclosed polymer composition can exhibit desirable values of melt flow rate (MFR) (measured at 300°C, 1.2 kilograms (kg), 360 seconds (s) according to ASTM D 1238). For example, according to aspects, a molded article formed from the disclosed polymer composition can exhibit an MFR in the range from about 9 cubic centimeters per 10 minutes ($cm^3$/10 min) to about 25 $cm^3$/10 min, including exemplary values of between about 9 $cm^3$/10 min and about 25 $cm^3$/10 min. For example, the MFR can be in the range of from about 13 $cm^3$/10 min to about 20 $cm^3$/10 min.

In still further aspects, a molded article formed from the disclosed polymer composition is capable of having an enhanced plating efficiency in a broad window of the laser parameters. In another aspect, a molded article or sample formed from the disclosed polymer composition can exhibit a plating index within a predetermined range. For example, according to aspects, a molded article or sample formed from the disclosed polymer composition can exhibit a plating index in the range of from about 0.70 to about 1.50, including exemplary values of about 0.01 units between 0.70 and 1.50. For example, the plating index can be in the range of from about 0.90 to about 1.30.

In one aspect, the disclosed polymer composition (or a molded article or sample formed therefrom) is capable of having an enhanced plating efficiency in a broad window of the laser parameters with a statistical variance of at least about 55% to about 85% lower than that measured for a substantially identical reference composition (having the same components and % weight, less the reflection additive) in the absence of a reflection additive, including exemplary values of about every numeral between 55% and 85%, lower than that measured for a substantially identical reference composition in the absence of a reflection additive. For example, the statistical variance can be in the range of from about 60% to about 80% lower than that measured for a substantially identical reference composition in the absence of a reflection additive.

The term "polycarbonate" as used herein is not intended to refer to only a specific polycarbonate or group of polycarbonates, but rather refers to the any one of the class of compounds containing a repeating chain of carbonate groups. The terms "polycarbonate" includes copolycarbonates, homopolycarbonates and (co)polyester carbonates. In one aspect, a polycarbonate material can include any one or more of those polycarbonate materials disclosed and described in U.S. Patent No. 7,786,246, which is hereby incorporated by reference in its entirety for the specific purpose of disclosing various polycarbonate compositions and methods for manufacture of same.

In an exemplary aspect, the polycarbonate polymer component comprises a bisphenol A polycarbonate polymer. In another exemplary aspect, the polycarbonate component comprises a blend of at least two different grade bisphenol A polycarbonates. To that end, a polycarbonate grade can, for example, be characterized by the melt volume rate (MVR) of the polycarbonate. For example, a disclosed polycarbonate, such as a bisphenol A polycarbonate, can be characterized by exhibiting a melt volume rate in the range of from about 4 grams per 10 minutes (g/10 min) to about 30 g/10 min at 300°C/1.2 kg. For example, the MVR can range from about 10 g/10 min to about 25 g/10 min, including for example an MVR in the range of from about 15 g/10 min to about 20 g/10 min. Further, for example, the MVR can be in the range of from about 4 g/10 min or about 30 g/10 min.

The polycarbonate component can be present in the polymer composition in any desired amount. For example, according to aspects of the disclosure, the polycarbonate polymer component can be present in an amount in the range of from about 10 weight % (wt %) up to about 90 weight % relative to the total weight of the polymer composition, including further exemplary amounts of about 15 weight %, about 20 weight %, about 25 weight %, about 30 weight %, about 35 weight %, about 40 weight %, about 45 weight %, about 50 weight %, about 55 weight %, about 60 weight %, about 65 weight %, about 70 weight %, about 75 weight %, about 80 weight %, and about 85 weight % or any combination of the above weight percents. For example, the polycarbonate polymer component can be present in an amount in the range of from about 10 weight % to about 20 weight %, or in an amount in the range of from about 10 weight % to about 30 weight %, or in an amount in the range of from about 50 weight % to about 90 weight %.

In aspects where the polycarbonate component comprises a blend of two or more polycarbonate polymers, it should be understood that each respect polycarbonate polymer present within the polycarbonate component can be present in any desired amount relative to the total weight percentage of the polycarbonate polymer component.

In another exemplary aspect, a polycarbonate polymer component comprising two different grade bisphenol A polycarbonates can be present in the polymer composition in an amount in the range of from about 45 weight % to about 70 weight %. According to this aspect, a first bisphenol A polycarbonate can be present in an amount in the range of from about 10 weight % to about 20 weight % relative to the total weight of polymer composition. Likewise, the second bisphenol A polycarbonate can be present in an amount in the range of from about 35 weight % to about 50 weight % relative to the total weight of polymer composition.

The disclosed polymer composition further comprises a laser direct structuring additive. As used herein, a laser direct structuring additive can refer to a metal containing additive suitable for use in a laser direct structuring process. To that end, as discussed more fully herein, an LDS additive is selected such that, after activating with a laser, a conductive path can be formed by a subsequent standard metallization or plating process. As such, when the LDS additive is exposed to a laser, elemental metal is released or activated.

In one aspect, a laser direct structuring additive is capable of being activated by electromagnetic radiation and thereby forming elemental metal nuclei. The laser thus draws the circuit pattern onto the polymer part and leaves behind a roughened surface containing embedded metal particles. These particles act as nuclei for the crystal growth during a subsequent metallization or plating process, such as a copper plating process or other plating processes, including gold plating, nickel plating, silver plating, zinc plating, or tin plating.

An exemplary commercially available laser direct structuring additive is Lazerflair 8840, commercially available from Merck. The Lazerflair 8840 comprises copper salts comprising copper hydroxide phosphate ($Cu_2OHPO_4$).

In one aspect, the LDS additive comprises a combination of a copper salt with a heavy metal mixture oxide spinel. In a further aspect, the heavy metal mixture oxide spinel comprises tin oxide.

In another aspect, the LDS additive has a mean particle size in an amount that ranges from about 0.01 micrometer ($\mu$m) to about 100 $\mu$m, including exemplary values of about every 0.01 units between 0.01 $\mu$m and 100 $\mu$m. For example, the mean particle size can be in the range of about 0.08 $\mu$m to about 90 $\mu$m. For example, the mean particle size can be in the range of about 0.5 $\mu$m to about 50 $\mu$m. In a yet further aspect, the mean particle size can be each exemplary value, for example, the mean particle size can be about 20 $\mu$m. In another aspect, the LDS additive comprises nano-size particles, about 0.01 $\mu$m to about 1 $\mu$m.

The laser direct structuring additive can be present in the polymer composition in an amount in the range of from greater than about zero to about 15 weight % relative to the total weight of the polymer composition, including for example, amounts of between any two integers between about 1 weight % and about 15 weight %. For example, the laser direct structuring additive can be present in an amount of from about 1 weight % to about 10 weight %, or about 1 weight % to about 7 weight % relative to the total weight of the polymer composition.

The disclosed polymer composition further comprises one or more reinforcement fillers. The reinforcing filler can be selected to impart additional impact strength and/or provide additional characteristics that can be based on the final selected characteristics of the polymer composition. The specific composition of a reinforcing filler can vary, provided that the filler is chemically compatible with the remaining components of the polymer composition.

In some aspects, the reinforcing filler comprises, for example, fibers comprising asbestos or the like fibers; silicates and silica powders, aluminum silicate (mullite), synthetic calcium silicate, zirconium silicate, fused silica, crystalline silica graphite, natural silica sand, or the like; boron powders, boron-nitride powder, boron-silicate powders, or the like; alumina; magnesium oxide (magnesia); calcium sulfate (as its anhydride, dihydrate or trihydrate); calcium carbonates, chalk, limestone, marble, synthetic precipitated calcium carbonates, or the like; talc, including but not limited to fibrous, modular, needle shaped, lamellar talc, or the like; wollastonite; surface-treated wollastonite; glass spheres including but not limited to hollow and solid glass spheres, silicate spheres, cenospheres, aluminosilicate (armospheres), or the like; kaolin, including but not limited to hard kaolin, soft kaolin, calcined kaolin, kaolin including various coatings known in the art to facilitate compatibility with the polymeric matrix resin, or the like; single crystal fibers or "whiskers" including but not limited to silicon carbide, alumina, boron carbide, iron, nickel, copper, or the like; glass fibers, (including continuous and chopped fibers), including but not limited to E, A, C, ECR, R, S, D, and NE glasses and quartz, or the like; sulfides including but not limited to molybdenum sulfide, zinc sulfide or the like; barium compounds including but not limited to barium titanate, barium ferrite, barium sulfate, heavy spar, or the like; metals and metal oxides including but not limited to particulate or fibrous aluminum, bronze, zinc, copper and nickel or the like; flaked fillers including but not limited to as glass flakes, flaked silicon carbide, aluminum diboride, aluminum flakes, steel flakes or the like; fibrous fillers, for example short inorganic fibers including but not limited to those derived from blends including at least one of aluminum silicates, aluminum oxides, magnesium oxides, and calcium sulfate hemihydrate or the like; natural fillers and reinforcements, including but not limited to wood flour obtained by pulverizing wood, fibrous products such as cellulose, cotton, sisal, jute, starch, cork flour, lignin, ground nut shells, corn, rice grain husks or the like; reinforcing organic fibrous fillers formed from organic polymers capable of forming fibers including but not limited to poly(ether ketone), polyimide, polybenzoxazole, poly(phenylene sulfide), polyesters, polyethylene, aromatic polyamides, aromatic polyimides, polyetherimides, polytetrafluoroethylene, acrylic resins, poly(vinyl alcohol) or the like; as well as additional fillers and reinforcing agents including but not limited to mica, clay, feldspar, flue dust, fillite, quartz, quartzite, perlite, tripoli, diatomaceous earth, carbon black, or the like, or combinations including at least one of the foregoing fillers.

In one aspect, the reinforcing filler comprising a flat glass fiber of the disclosed polymer composition further comprises a mineral filler, or a carbon fiber, or a combination thereof.

In another aspect, the flat glass fiber, for example, can be Nittobo (flat) glass fiber, CSG3PA820. In an even further aspect, the glass bead has a cross section that flat.

The reinforcing filler can be present in the polymer composition in an amount in the range of from greater than about 10 weight % to about 50 weight % relative to the total weight of the polymer composition, including for example, amounts of , about 15 weight %, about 20 weight %, about 25 weight %, about 30 weight %, about 35 weight %, about 40 weight %, and about 45 weight % . It is understood that the reinforcing filler additive can be present in an amount within any range of amounts derived from any two of the above stated values. For example, the reinforcing filler additive can be present in an amount of from about 20 weight % to about 40 weight %, or about 25 weight % to about 35 weight % relative to the total weight of the polymer composition.

The disclosed polymer composition further comprises one or more reflection additives. The reflection additive can be selected to impart a strong reflection effect and/or provide additional characteristics that can be based on the final selected characteristics of the polymer composition. The specific composition of the reflection additive can vary, provided that the reflection additive is chemically compatible with the remaining components of the polymer composition. The reflection effect from the reflection additive was studied by evaluating the light absorption/reflection behavior of the materials. Herein, reflection additive is equivalent to reflection particle.

In one aspect, the reflection additive is any reflection additive that has a strong reflection curve (e.g., measured via transmission, absorption, reflection spectroscopy). In another aspect, the strong reflection curve can be measured as >50% reflectance % at the applied light wavelength. In another aspect, the strong reflection curve can occur at a laser wavelength ranging from 1000 nanometers (nm) to 1100 nm. In a further aspect, the strong reflection curve can occur at a laser wavelength of 1064 nm. In an even further aspect, the strong reflection curve can occur at a laser wavelength of 1024 nm. In a yet further aspect, the reflection additive has a high refractive index.

In one aspect, the reflection additive comprises titanium oxide or aluminum or a combination thereof. In another aspect, the titanium oxide or aluminum or a combination can be in any form that allows for reflection.

Non-limiting examples of titanium oxide include titanium oxide (IV), titanium oxide (III), and titanium oxide (II). Non-limiting examples of crystal forms of titanium oxide can include anatase-form, rutile-form, or brookite-form. In another aspect, titanium oxide (IV) can be amorphous, for example, in the anatase-form or rutile-form. In a further aspect, the titanium oxide can be in a powder form.

Non-limiting examples of aluminum include aluminum, aluminum (III) oxide, alumina monohydrate, alpha-alumina, alumina trihydrate, rock bauxite, gibbsite, diaspora, boehmite, or corundum.

The reflection additive can be present in an amount in the range of from about 1 weight % to 10 weight % relative to the total weight of the polymer composition, including for example about 2 weight %, about 3 weight %, about 4 weight %, about 5 weight %, about 6 weight %, about 7 weight %, about 8 weight %, and about 9 weight % and ranges reciting any two of the foregoing weight percentages. For example, the reflection additive can be present in an amount in the range of from about 1 weight % to about 9 weight %.

The disclosed polymer composition can optionally comprise one or more additives conventionally used in the manufacture of molded polymer parts with the proviso that the optional additives do not adversely affect the desired properties of the resulting composition. Mixtures of optional additives can also be used. Such additives can be mixed at a suitable time during the mixing of the components for forming the composite mixture. For example, the disclosed composition can comprise one or more fillers, plasticizers, stabilizers, anti-static agents, flame-retardants, impact modifiers, colorant, antioxidant, and/or mold release agents. In one aspect, the composition further comprises one or more optional additives selected from an antioxidant, impact modifier, flame retardant, inorganic filler, or stabilizer, or a combination thereof. Exemplary additives can be found in U.S. Patent No. 7,786,246, which is hereby incorporated by reference in its entirety for the specific purpose of disclosing optional additives for the polymer compositions.

Additionally, materials to improve flow and other properties can be added to the composition, such as low molecular weight hydrocarbon resins. Particularly useful classes of low molecular weight hydrocarbon resins are those derived from petroleum $C_5$ to $C_9$ feedstock that are derived from unsaturated $C_5$ to $C_9$ monomers obtained from petroleum cracking.

In a further aspect, the invention relates to a method for making a polymer composition, the method comprising forming a blend composition comprising one or more of (a) a polycarbonate polymer; (b) a laser direct structuring additive; and (c) a reflection additive, and wherein the polymer composition is capable of being plated after being activated using a laser.

In one aspect, the laser direct structuring process can involve three steps: 1) injection molding, 2) laser structuring, and 3) metallizing.

In a further aspect, during the injection molding step, the laser direct structuring additive and reflection additive can be mixed with the polycarbonate polymer. In another aspect, the polymer composition further comprises one or more optional additives discussed herein.

As described herein, the present invention relates to a blended polymer composition. The blended polymer composition of the present disclosure can be formed using any known method of combining multiple components to form a polymer resin. In one aspect, the components are first blended in a high-speed mixer. Other low shear processes including but not limited to hand mixing can also accomplish this blending. The blend is then fed into the throat of a twin-screw extruder via a hopper. Alternatively, one or more of the components can be incorporated into the composition by feeding directly into the extruder at the throat and/or downstream through a sidestuffer. The extruder is generally operated at a temperature higher than that necessary to cause the composition to flow. The extrudate is immediately quenched in a water batch and pelletized. The pellets so prepared when cutting the extrudate can be one-fourth inch long or less as desired. Such pellets can be used for subsequent molding, shaping, or forming. In one aspect, the blend composition is formed by extrusion blending.

In a further aspect, during the laser structuring step, a laser is used to form a conductive path during the laser structuring step. In a still further aspect, the laser used to form a conductive path is laser direct structuring. In a yet further aspect, laser direct structuring comprises laser etching. In an even further aspect, laser etching can be carried out to provide an activated surface.

In a further aspect, at least one laser beam draws at least one pattern on the surface of the polymer composition during the laser structuring step. In a still further aspect, the employed filler composition can release at least one metallic nucleus. In a yet further aspect, the at least one metallic nucleus that has been released can act as a catalyst for reductive copper plating process.

In a further aspect, laser etching can be carried out at a broad window of the laser parameters at about 1 watt (W) to about 10 W power with a frequency from about 30 kHz to about 110 kHz and a speed of about 1 meter per second (m/s) to about 5 m/s. In a still further aspect, laser etching can be carried out at about 1 W to about 10 W power with a frequency from about 40 kilohertz (kHz) to about 100 kHz and a speed of about 2 m/s to about 4 m/s.

In a further aspect, a rough surface can form in the LDS process. The rough surface may entangle the copper plate with the polymer matrix in the polymer composition, which can provide adhesion between the copper plate and the polymer composition.

The metalizing step can, in various aspects, be performed using conventional techniques. For example, in one aspect, an electroless copper plating bath can be used during the metallization step in the LDS process. Thus, in various aspects, plating a metal layer onto a conductive path can be metallization. In a still further aspect, metallization can comprise the steps: a) cleaning the etched surface; b) additive build-up of tracks; and c) plating.

In certain aspects, a molded article formed from the disclosed polymer composition can exhibit desirable value of a plating index. For example, according to aspects, a molded article formed from the disclosed polymer composition can exhibit a plating index in the range of from about 0.70 to about 1.50.

In one aspect, disclosed herein a method for making a polymer composition, wherein a molded article formed from the disclosed polymer composition is capable of having an enhanced plating efficiency in a broad window of the laser parameters with a statistical variance of at least about 55% to about 85% lower than that measured for a substantially identical reference composition in the absence of a reflection additive.

A shaped, formed, or molded article including the polymer composition is also provided. The polymer composition can be molded into useful shaped articles by a variety of means such as injection molding, extrusion, rotational molding, blow molding and thermoforming to form articles such as, for example, personal computers, notebook and portable computers, cell phone antennas and other such communications equipment, medical applications, RFID applications, automotive applications, and the like.

Evaluation of the mechanical properties can be performed through various tests according to several standards, e.g., ASTM D790, ASTM D 638, ASTM D256, ASTM D 1238, ASTM D 4812, ASTM D 648, etc. Robustness of plating performance can be measured via a performance ranking, or plating ranking, ranging from top performance to bottom performance. The ranking can be partitioned in various levels. In one aspect, a plating ranking can have a level of "10" for top performance and a level of "0" for bottom performance.

In one aspect, the article comprises the product of extrusion molding or injection molding a polymer composition described herein that is capable of being plated after being activated (by a laser in some embodiments).

In a further aspect, the molded article further comprises a conductive path formed by activation with a laser. In a yet further aspect, the article further comprises a metal layer plated onto the conductive path. In an even further aspect, the metal layer can be a copper layer. In a still further aspect, the metal layer has a thickness of about 0.8 micrometers or higher as measured according to ASTM B568.

In various aspects, the polymer composition can be used in the field of electronics. In a further aspect, non-limiting examples of fields which can use 3D MID, LDS process, or a polymer composition include electrical, electromechanical, Radio Frequency (RF) technology, telecommunication, automotive, aviation, medical, sensor, military, and security. In a still further aspect, the use of 3D MID, LDS process, or a polymer composition can also be present in overlapping fields, for example in mechatronic systems that integrate mechanical and electrical properties which can, for example, be used in automotive or medical engineering. Certain devices are in the fields of a computer device, a household appliance, a decoration device, an electromagnetic interference device, a printed circuit, a Wi-Fi device, a Bluetooth device, a global positioning system (GPS) device, a cellular antenna device, a smart phone device, an automotive device, a military device, an aerospace device, a medical device, such as a hearing aid, a sensor device, a security device, a shielding device, an radio frequency (RF) antenna device, or a radio frequency identification (RFID) device. In a further aspect, non-limiting examples of devices in the automotive field which can use 3D MID, LDS process, or the disclosed polymer composition in the vehicle's exterior include a pressure and flow sensor for engine management, air conditioning, crash detection, and an exterior lighting fixture.

Plastic plating was developed for industrial application because of the low cost, the ability to mold large and complex parts, and the reduction of weight. Plastic plating also allows the rapid development of new designs and reduced space requirements in both production and the devices themselves. As gasoline prices rise, consumers have become more interested in automotive weight reduction. Non-limiting examples of plastic materials which can be plated include acrylonitrile butadiene styrene (ABS), polypropylene, polysulfone, polyethersulfone, polyetherimide, fluorocarbons such as polytetrafluoroethylene (e.g. Teflon®), polyarylether, polycarbonate, polyphenylene oxide, polyacetal. The LDS process can be used for plastic plating and the plastic material can be included in the polymer composition or in the polymer matrix of the polymer composition.

In one aspect, the molded article can have a thickness ranging from about 1.2 millimeters (mm) to about 2.0 mm. For example, the molded article can have a thickness of about 1.6 mm. In further aspect, the molded article can have a thickness ranging from about 2.8 to about 3.5 mm. For example, the molded article can have a thickness of about 3.2 mm.

In a further aspect, the resulting disclosed composition can be used to provide any desired shaped, formed, or molded article using means such as injection molding, extrusion, rotational molding, blow molding and thermoforming. According to some aspects, the disclosed composition can be used to form articles such as a printed circuit board carrier, a burn in test socket, a flex bracket for a hard disk drive, and the like.

EXAMPLES

The non-limiting following examples are put forth so as to provide those of ordinary skill in the art with a disclosure of how the methods, devices, and systems disclosed and claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in degrees Celsius (°C) or is at ambient temperature, and pressure is at or near atmospheric.

GENERAL MATERIALS AND METHODS

For the Examples described herein, molded articles were prepared for analysis using representative compounding and molding profiles described in Tables 1 and 2 below. All samples were prepared by melt extrusion by feeding the pre-blend into a 37 mm Toshiba SE Twin Screw Extruder with co-rotating twin screw (37 mm) with a barrel size of 1500 mm, and a screw speed kept at about 300 rotations per minute (rpm) with the torque value maintained at about 70% and operated under standard processing conditions well known to one skilled in the art. Each of the component materials disclosed herein are either commercially available and/or the methods for the production thereof are known to those of ordinary skill in the art.

After extrusion, the pellets were dried at about 110°C for a minimum time of three hours prior to molding test samples. Table 1 lists the compounding profile and equipment set up for glass filled PC LDS with and without reflection particles. Table 2 shows a representative molding profile for the glass filled PC LDS of Table 1.

Table 1

| Parameters | Unit | Values |
|---|---|---|
| Compounder Type | None | TEM-37BS |
| Barrel Size | mm | 1500 |
| Die | mm | 3 |
| Free (Zone 0) Temp | °C | 50 |
| Zone 1 Temp | °C | 100 |
| Zone 2 Temp | °C | 150 |
| Zone 3 Temp | °C | 200 |
| Zone 4 Temp | °C | 255 |
| Zone 5 Temp | °C | 255 |
| Zone 6 Temp | °C | 255 |
| Zone 7 Temp | °C | 255 |
| Zone 8 Temp | °C | 255 |
| Zone 9 Temp | °C | 260 |
| Zone 10 Temp | °C | 260 |
| Zone 11 Temp | °C | 260 |
| Die Temp | °C | 265 |
| Screw speed | rpm | 300 |
| Throughput | kg/hr* | 40 |
| Torque | % | 70 |
| Vacuum 1 | MPa | -0.08 |
| Side Feeder 1 speed | rpm | >200 |
| Melt Temperature | °C | 275 |
| *kilograms per hour (kg/hr) | | |

Table 2.

| Parameters | Unit | Values |
|---|---|---|
| Cnd: Pre-drving time | Hour | 3 |
| Cnd: Pre-drving temp | °C | 110 |
| Molding Machine | NONE | FANUC |
| Mold Type (insert) | NONE | ASTM tensile, ASTM flexural, ASTM Izod, Colorchip |
| Hopper Temp | °C | 50 |

(continued)

| Parameters | Unit | Values |
|---|---|---|
| Zone 1 Temp | °C | 270-280 |
| Zone 2 Temp | °C | 275-285 |
| Zone 3 Temp | °C | 280-290 |
| Nozzle Temp | °C | 275-285 |
| Mold Temp | °C | 80-120 |
| Screw speed | rpm | 100 |
| Back Pressure | kgf/cm$^{2*}$ | 30-50 |
| Cooling time | s | 15 |
| Injection speed | mm/s | 50-150 |
| Holding pressure | kgf/cm$^2$ | 600-800 |
| Max. Injection pressure | kgf/cm$^2$ | 1000-1200 |
| *kilogram force per square centimeter (kgf/cm$^2$) | | |

Heat deflection temperature was determined per ASTM D 648 with flatwise specimen orientation with specimen dimensions of 127mm x 12.7mm x 3.18mm. Data were collected using a Ceast HDT VICAT instrument and are provided in units of °C.

The notched Izod impact ("NII") test was carried out on 63.5mm x 12.7mm x 3.18mm mm molded samples (bars) according to ASTM D 256 at 23 °C. Test samples were conditioned in ASTM standard conditions of 23°C and 55% relative humidity for 48 hours and then were evaluated. NII was determined using a CEAST Impact Tester.

The unnotched Izod impact test was carried out on molded parts (bars) according to ASTM D 4812 at 23°C. Test specimen was conditioned at ASTM standard conditions of 23°C and 55% relative humidity for 48 hours and then evaluated.

Flexural properties (modulus and strength) were measured using 3.2 mm bars in accordance with ASTM D 790. Flexural strength (in units of MPa) and flexural modulus (in units of MPa) are reported at yield.

Melt volume - flow rate ("MFR") was determined according to standard ASTM D 1238 under the following test conditions: 300 °C/1.2 kg load/360 second dwell time. Data below are provided for MFR in cm$^3$/10 min.

Tensile properties (modulus, strength, and strength at yield) were measured on 3.2 mm bars in accordance with ASTM D 638. Tensile strength (for either at break or at yield, in units of MPa), tensile modulus (in units of MPa), and tensile elongation (%) are reported at break.

Surface roughness was measured using OLYMPUS LEXT OLS4000 3 D Measuring Laser Microscope under an objective lens of 20x. The scan area was set as 640 $\mu$m x 640 $\mu$m, with the threshold value $\lambda_c$ set as 125 $\mu$m. Areal roughness parameter ($S_a$) was provided to indicate the surface roughness over the scan area. For each specimen, the surface roughness was measured at the three different regions and the mean value was reported.

LASER DIRECT STRUCTURING FORMULATIONS COMPRISING COPPER SALT AS LDS ADDITIVE AND PLATING EFFICIENCY ENHANCING ADDITIVES

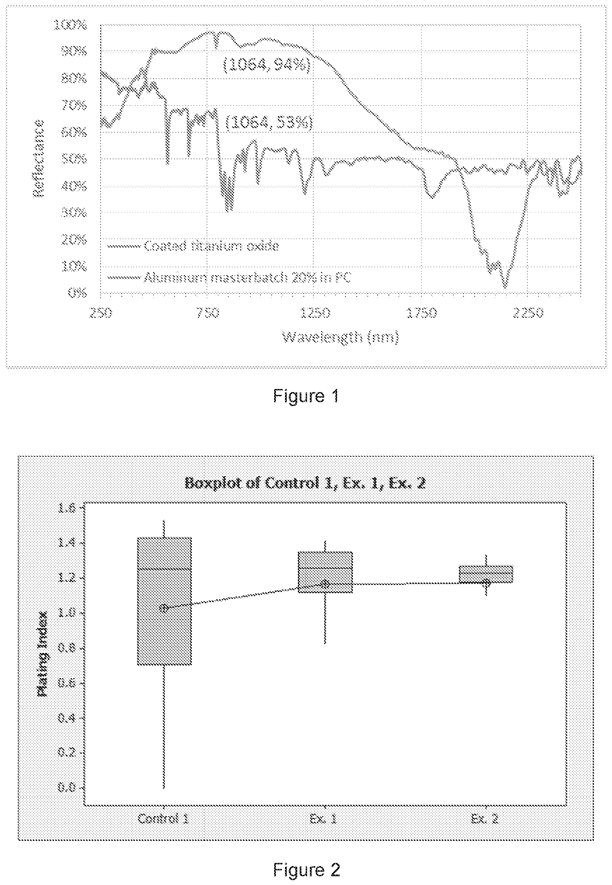

For the non-limiting Examples described herein below, sample compositions were prepared from the components described in Table 3 below. The performance of the composites of glass filled polycarbonate with the copper hydroxide phosphate ($Cu_2OHPO_4$) LDS additive was tested with and without addition of the reflection additive, titanium oxide or aluminum. The reflectance behavior of the two reflection additives are shown in FIG. 1. Both the coated titanium oxide and the aluminum masterbatch 20% in PC show over 50% reflectance at the applied light wavelength 1064 nm. The composites described herein were prepared accordingly to the compounding and molding profiles described above. The formulation compositions (labeled as "Example 1", "Example 2", "Example 3", and the like) and various comparator samples (labeled as "Control 1," "Control 2," and the like) are further described herein and in Table 3.

Three compositions were prepared each containing 3 wt % of a standard copper hydroxide phosphate LDS additive. The 2 wt % coated titanium oxide, a reflection additive, was added to the sample labeled Example 1. The 2 wt % Aluminum, another reflection additive, as from the 10 wt % Aluminum masterbatch with 20% concentration in PC, was added to the sample labeled Example 2. While no reflection additive was added to Control 1. Table 4 shows a performance comparison of Control 1, Example 1 and Example 2.

Table 3

| Formulation | Control 1 | Example 1 | Example 2 |
|---|---|---|---|
| Sebacic acid/BPA/PCP polyestercarbonate | 17.4 wt % | 17.4 wt % | 17.4 wt % |
| Sebacic Acid/BPA copolymer | 43.49 wt % | 41.49 wt % | 33.49 wt % |
| Phosphite stabilizer | 0.1 wt % | 0.1 wt % | 0.1 wt % |
| Pentaerythritol tetrastearate | 0.5 wt % | 0.5 wt % | 0.5 wt % |
| Hindered Phenol anti-oxidant | 0.1 wt % | 0.1 wt % | 0.1 wt % |
| Epoxy | 0.1 wt % | 0.1 wt % | 0.1 wt % |
| Mono Zinc Phosphate | 0.3 wt % | 0.3 wt % | 0.3 wt % |
| Phosphorous Acid 45 % | 0.01 wt % | 0.01 wt % | 0.01 wt % |
| Lazerflair 8840 | 3 wt % | 3 wt % | 3 wt % |
| Acrylic Polymer Impact Modifier | 5 wt % | 5 wt % | 5 wt % |
| Nittobo CSG 3PA-830 flat fiber | 30 wt % | 30 wt % | 30 wt % |
| Coated titanium oxide | 0 wt % | 2 wt % | 0 wt % |
| Aluminum masterbatch 20% in PC | 0 wt % | 0 wt % | 10 wt % |

Table 4

| Test Method | Test Detail | Test Description | Units | Control 1 | Ex. 1 | Ex. 2 |
|---|---|---|---|---|---|---|
| MFR | 300°C/1.2kg/360s | ASTM D1238 | $cm^3$/10 min | 16 | 16 | 15 |
| HDT | 0.45 MPa/3.2 mm | ASTM D 648 | °C | 126 | 124 | 124 |
| Flexural Modulus | 3.2 mm, 1.27 mm/min | ASTM D 790 | MPa | 7790 | 7000 | 7500 |
| Flexural Strength | yield, 3.2 mm, 1.27 mm/min | ASTM D 790 | MPa | 165 | 138 | 157 |
| Tensile Modulus | 5mm/min | ASTM D 638 | MPa | 8602 | 8068 | 9087 |
| Tensile Strength | break, 5 mm/min | ASTM D 638 | MPa | 110 | 89 | 112 |
| Tensile Elongation | break, 5 mm/min | ASTM D 638 | % | 2.3 | 2.0 | 2.3 |
| Notched IZOD | 23°C, 0.28 kgf/m (2 lbf/ft) | ASTM D256 | J/m | 163 | 111 | 117 |
| Unnotched IZOD | 23°C, 0.69 kgf/m (5 lbf/ft) | ASTM D256 | J/m | 734 | 546 | 514 |
| Color L | | | | 67 | 86 | 63 |
| Plating Index | | | | 1.03 | 1.16 | 1.17 |

A comparison of the plating efficiency, as measured by a plating index for a distinct set of laser parameters is shown in Table 5.

The Plating Index can be calculated as follows:

$$Plating\ Index = \frac{Average\ Cu\ thickness\ at\ a\ given\ parameter}{Average\ Cu\ thickness\ for\ reference\ sample\ at\ the\ same\ parameter}$$

The results indicate that addition of the reflection additive led to the higher plating efficiency measured at most laser parameters.

Table 5

| Power, W | Frequency, kHz | Speed, m/s | Control 1 | Ex. 1 | Ex. 2 |
|---|---|---|---|---|---|
| 10 | 100 | 2 | 1.3 | 1.2 | 1.2 |
| 10 | 70 | 2 | 1.3 | 1.3 | 1.2 |
| 2 | 100 | 2 | 0.0 | 0.8 | 0.9 |
| 2 | 70 | 2 | 0.4 | 0.9 | 1.1 |
| 2 | 40 | 2 | 1.0 | 1.2 | 1.2 |
| 7 | 80 | 4 | 1.2 | 1.4 | 1.3 |
| 5 | 80 | 4 | 1.0 | 1.2 | 1.3 |
| 3 | 80 | 4 | 0.1 | 0.5 | 0.7 |
| 3 | 100 | 2 | 0.5 | 1.1 | 1.2 |
| 3 | 70 | 2 | 1.0 | 1.2 | 1.3 |
| 3 | 40 | 2 | 1.2 | 1.3 | 1.3 |
| 5 | 100 | 4 | 0.8 | 1.1 | 1.3 |
| 3 | 100 | 4 | 0.0 | 0.3 | 0.7 |
| 9 | 80 | 4 | 1.4 | 1.4 | 1.3 |
| 5 | 100 | 2 | 1.4 | 1.3 | 1.3 |
| 5 | 70 | 2 | 1.5 | 1.4 | 1.2 |
| 5 | 40 | 2 | 1.5 | 1.4 | 1.2 |
| 11 | 100 | 4 | 1.5 | 1.3 | 1.2 |
| 9 | 100 | 4 | 1.5 | 1.4 | 1.2 |
| 7 | 100 | 4 | 1.3 | 1.3 | 1.3 |
| 8 | 100 | 2 | 1.4 | 1.2 | 1.2 |
| 8 | 70 | 2 | 1.4 | 1.3 | 1.2 |

The measured plating index values were plotted to further compare the effect of the reflection additive on a plating efficiency enhancement of LDS polycarbonate composites and shown in FIG. 2. FIG. 2 includes boxplots of a plating index measured for 3 wt % copper hydroxide phosphate ($Cu_2OHPO_4$), as LDS additive, with and without the two types of reflection additive. Solid circles indicate the plating index mean values. On one hand, FIG 2 demonstrates an increase in a mean value with the addition of the reflection additive. On the other hand, FIG 2 demonstrates a narrower distribution of plating index by different laser parameters, which means a broader laser window with the addition of the reflection additive.

EFFECT OF VARIOUS PLATING EFFICIENCY ENHANCING ADDITIVES AND THEIR CONCENTRATION ON PERFORMANCE

For the non-limiting Examples described herein below, sample compositions were prepared from the components described in Table 6 below. The performance of the composites of glass filled polycarbonate with the copper hydroxide phosphate ($Cu_2OHPO_4$) LDS additive was tested with and without addition of the reflection additive. The composites described herein were prepared accordingly to the compounding and molding profiles described in Tables 1 and 2.

Three compositions were prepared each containing 3 wt. % of a copper hydroxide phosphate ($Cu_2OHPO_4$) (Trade name: Lazerflair® 8840) LDS additive. The 2 wt % and the 5 wt % coated titanium oxide, a reflection additive, were added to the sample labeled Example 3 and Example 4, respectively, while no coated titanium oxide was added to Control 2. Table 7 shows a performance comparison of all three formulations.

Table 6

| Formulation | Control 2 | Example 3 | Example 4 |
|---|---|---|---|
| Sebacic acid/BPA/PCP polyestercarbonate | 17.4 | 17.4 | 15.7 |
| Sebacic Acid/BPA copolymer | 43.49 | 41.49 | 40.29 |
| Phosphite stabilizer | 0.1 | 0.1 | 0.1 |
| Pentaerythritol tetrastearate | 0.5 | 0.5 | 0.5 |
| Hindered Phenol anti-oxidant | 0.1 | 0.1 | 0.1 |
| Epoxy | 0.1 | 0.1 | 0.1 |
| Mono Zinc Phosphate | 0.3 | 0.3 | 0.2 |
| Phosphorous Acid 45 % | 0.01 | 0.01 | 0.01 |
| Lazerflair 8840 | 3 | 3 | 3 |
| Acrylic Polymer Impact Modifier | 5 | 5 | 5 |
| Nittobo CSG 3PA-830 flat fiber | 30 | 30 | 30 |
| Coated titanium oxide | 0 | 2 | 5 |

Table 7

| Typical Property | Test Method | Test Description | Units | Ctrl. 2 | Ex. 3 | Ex. 4 |
|---|---|---|---|---|---|---|
| MFR | 300°C/1.2kg/360s | ASTM D 1238 | $cm^3$/10 min | 17 | 18 | 15 |
| HDT | 0.45 MPa/3.2 mm | ASTM D 648 | °C | 126 | 125 | 125 |
| Flexural Modulus | 3.2 mm, 1.27 mm/min | ASTM D 790 | MPa | 7200 | 6410 | 6780 |
| Flexural Strength | yield, 3.2 mm, 1.27 mm/min | ASTM D 790 | MPa | 167 | 136 | 133 |
| Tensile Modulus | 5 mm/min | ASTM D 638 | MPa | 8789 | 7966 | 8112 |
| Tensile Strength | break, 5 mm/min | ASTM D 638 | MPa | 109 | 89 | 90 |
| Tensile Elongation | break, 5 mm/min | ASTM D 638 | % | 2.3 | 2.0 | 2.0 |
| Notched IZOD | 23°C, 0.28 kgf/m* (2 lbf/ft)* | ASTM D256 | J/m | 156 | 99 | 91 |
| Unnotched IZOD | 23°C, 0.69 kgf/m (5 lbf/ft) | ASTM D256 | J/m | 671 | 465 | 473 |
| Color L | | | | 62 | 86 | 91 |
| Plating Index | | | | 1.06 | 1.19 | 1.28 |
| *kilogram force per meter (kgf/m)<br>*pound force per foot (lbf/ft) | | | | | | |

A comparison of the plating efficiency, as measured by a plating index for a distinct set of laser parameters is shown in Table 8. Since the plating index values that largely accepted by LDS industry are higher or at about 0.7, the values lower than about 0.7 are considered as poor quality which need improvement. This results indicate that when 3 wt. % $Cu_2OHPO_4$ was used as a LDS additive, six plating index values measured in Control 2 for some laser parameters were lower than 0.7. Example 3 with the 2 wt % titanium oxide shows two plating index values lower than 0.7. Example 4 with the 5 wt % titanium oxide shows no plating index value lower than 0.7. This demonstrates that, the addition of the reflection additive, improved the measured plating index values, wherein samples comprising titanium oxide as a reflection additive demonstrated higher plating index values for a larger number of the laser parameters.

Table 8

| Power, w | Frequency, kHZ | Speed, m/s | Ctrl. 2 | Ex. 3 | Ex. 4 |
|---|---|---|---|---|---|
| 10 | 100 | 2 | 1.3 | 1.3 | 1.4 |

(continued)

| Power, w | Frequency, kHZ | Speed, m/s | Ctrl. 2 | Ex. 3 | Ex. 4 |
|---|---|---|---|---|---|
| 10 | 70 | 2 | 1.4 | 1.3 | 1.3 |
| 10 | 40 | 2 | 1.5 | 1.4 | 1.5 |
| 2 | 100 | 2 | 0.0 | 0.5 | 1.0 |
| 2 | 70 | 2 | 0.4 | 1.0 | 1.0 |
| 2 | 40 | 2 | 1.0 | 1.2 | 1.3 |
| 7 | 80 | 4 | 1.2 | 1.3 | 1.3 |
| 5 | 80 | 4 | 0.9 | 1.2 | 1.4 |
| 3 | 80 | 4 | 0.2 | 0.7 | 1.0 |
| 3 | 100 | 2 | 0.5 | 1.1 | 1.0 |
| 3 | 70 | 2 | 0.9 | 1.3 | 1.5 |
| 3 | 40 | 2 | 1.3 | 1.4 | 1.4 |
| 5 | 100 | 4 | 0.6 | 1.1 | 0.9 |
| 3 | 100 | 4 | 0.0 | 0.2 | 0.7 |
| 9 | 80 | 4 | 1.5 | 1.4 | 1.6 |
| 5 | 100 | 2 | 1.4 | 1.4 | 1.4 |
| 5 | 70 | 2 | 1.4 | 1.4 | 1.5 |
| 5 | 40 | 2 | 1.5 | 1.4 | 1.4 |
| 11 | 100 | 4 | 1.4 | 1.4 | 1.4 |
| 9 | 100 | 4 | 1.4 | 1.4 | 1.5 |
| 7 | 100 | 4 | 1.2 | 1.3 | 1.3 |
| 8 | 100 | 2 | 1.4 | 1.3 | 1.3 |
| 8 | 70 | 2 | 1.4 | 1.3 | 1.3 |
| 8 | 40 | 2 | 1.5 | 1.4 | 1.4 |

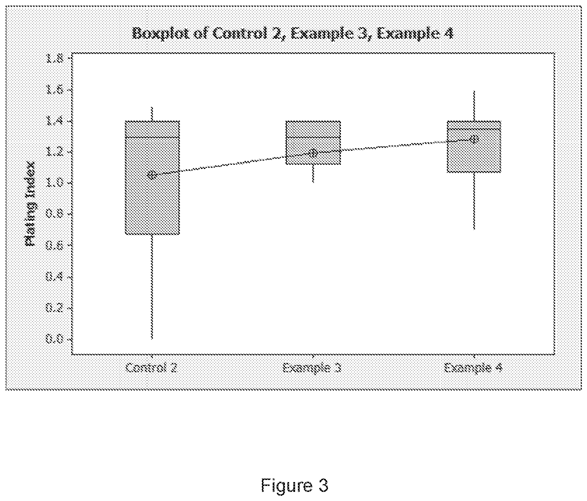

The measured plating index values were plotted to further compare the effect of the reflection additive on a plating efficiency enhancement of LDS polycarbonate composites and shown in FIG. 3. FIG. 3 includes boxplots of a plating index measured for 3 wt % copper hydroxide phosphate ($Cu_2OHPO_4$), as LDS additive, with and without the reflection additive (titanium dioxide). Solid circles indicate the plating index mean values. On one hand, FIG. 3 demonstrates an increase in the mean value with the addition of the reflection additive, and a further increase in the mean value with the increased loading of titanium dioxide from 2 wt % to 5 wt %. On the other hand, FIG. 3 demonstrates a narrower distribution of plating index values by different laser parameters, which means a broader laser window, with the addition of the reflection additive.

**Claims**

1. A polymer composition comprising:

a polycarbonate polymer;
a laser direct structuring additive comprising a copper salt, the laser direct structuring additive being capable of being activated by electromagnetic radiation and thereby forming elemental metal nuclei;
a reflection additive, wherein the polymer composition is capable of being plated after being activated using a laser, and
a reinforcing filler comprising a flat glass fiber present in an amount in the range from 10 weight % to 50 weight % relative to the total weight of the polymer composition, and wherein the combined weight percent value of all components is 100.

2. The polymer composition of claim 1, wherein the copper salt comprises a copper hydroxide phosphate.

3. The polymer composition of claim 1-2, wherein the reflection additive comprises titanium oxide, elemental aluminum, aluminum (III) oxide, alumina monohydrate, alpha-alumina, alumina trihydrate, rock bauxite, gibbsite, diaspora, boehmite, corundum or a combination thereof.

4. The polymer composition of any of claims 1-3, wherein the polycarbonate polymer comprises a bisphenol A polycarbonate polymer.

5. The polymer composition of claim 4, wherein the bisphenol A polycarbonate polymer comprises a blend of at least two different bisphenol A polycarbonates.

6. The polymer composition of any of claims 1-5, wherein the polycarbonate polymer is present in an amount in the range from 10 weight % to 90 weight % relative to the total weight of the polymer composition, and wherein the combined weight percent value of all components is 100.

7. The polymer composition of any of claims 1-6, wherein the laser direct structuring additive is present in an amount in the range from 1 weight % to 10 weight % relative to the total weight of the polymer composition, and wherein the combined weight percent value of all components is 100.

8. The polymer composition of any of claims 1-7, wherein the reflection additive is present in an amount in the range of from 1 weight % to 10 weight % relative to the total weight of the polymer composition, and wherein the combined weight percent value of all components is 100.

9. The polymer composition of claim 1-8, further comprising one or more additional additives comprising an antioxidant, impact modifier, flame retardant, inorganic filler, or stabilizer, or a combination thereof.

10. The polymer composition of any of claims 1-9, wherein the polymer composition demonstrates a flexural modulus equal to or greater than 3 GPa.

11. The polymer composition of any of claims 1-10, wherein the polymer composition demonstrates a tensile modulus equal to or greater than 3 GPa.

12. The polymer composition of any of claims 1-11, wherein the polymer composition can exhibit a plating index in the range of from 0.70 to 1.50.

13. A method comprising:

forming a polymer composition comprising a polycarbonate polymer, a laser direct structuring additive comprising a copper salt, a reflection additive, and a reinforcing filler comprising a flat glass fiber present in an amount in the range from 10 weight % to 50 weight % relative to the total weight of the polymer composition; and activating a surface of the formed polymer composition using a laser to release at least one elemental metal nucleus, wherein the polymer composition is capable of being plated after being activated using a laser, wherein the polymer composition is capable of having a plating index value with a statistical variance of at least 55 % to 85 % lower than that measured for a substantially identical reference composition in the absence of the reflection additive

14. The method of claim 13, further comprising subjecting at least a portion of the activated surface of the polymer composition to a metallizing process, wherein the at least one released metallic nucleus acts as a catalyst for the metallizing process.

15. An article molded from a polymer composition of any one of claims 1-14.

16. The article of claim 15, wherein the article comprises a computer device, a household appliance, a decoration device, an electromagnetic interference device, a printed circuit, a Wi-Fi device, a Bluetooth device, a GPS device, a cellular antenna device, a smart phone device, an automotive device, a military device, an aerospace device, a medical device, a hearing aid, a sensor device, a security device, a shielding device, a RF antenna device, or a RFID device.

**Patentansprüche**

1. Eine Polymerzusammensetzung, umfassend:

   ein Polycarbonatpolymer;
   ein Laserdirektstrukturierungsadditiv, umfassend ein Kupfersalz, wobei das Laserdirektstrukturierungsadditiv durch elektromagnetische Strahlung aktiviert werden kann und dadurch elementare Metallkerne bildet;
   ein Reflexionsadditiv, wobei die Polymerzusammensetzung nach der Aktivierung mit einem Laser plattiert werden kann, und
   einen verstärkenden Füllstoff, umfassend eine Flachglasfaser, die in einer Menge im Bereich von 10 Gew.-% bis 50 Gew.-%, bezogen auf das Gesamtgewicht der Polymerzusammensetzung, vorhanden ist, und wobei der kombinierte Gewichtsprozentwert aller Komponenten 100 beträgt.

2. Die Polymerzusammensetzung nach Anspruch 1, wobei das Kupfersalz ein Kupferhydroxidphosphat umfasst.

3. Die Polymerzusammensetzung nach Anspruch 1 bis 2, wobei das Reflexionsadditiv Titanoxid, elementares Aluminium, Aluminium(III)-oxid, Aluminiumoxidmonohydrat, Alpha-Aluminiumoxid, Aluminiumoxidtrihydrat, Gesteinsbauxit, Gibbsit, Diaspora, Böhmit, Korund oder eine Kombination davon umfasst.

4. Die Polymerzusammensetzung nach einem der Ansprüche 1 bis 3, wobei das Polycarbonatpolymer ein Bisphenol-A-Polycarbonatpolymer umfasst.

5. Die Polymerzusammensetzung nach Anspruch 4, wobei das Bisphenol-A-Polycarbonatpolymer eine Mischung aus mindestens zwei verschiedenen Bisphenol-A-Polycarbonaten umfasst.

6. Die Polymerzusammensetzung nach einem der Ansprüche 1 bis 5, wobei das Polycarbonatpolymer in einer Menge im Bereich von 10 Gew.-% bis 90 Gew.-%, bezogen auf das Gesamtgewicht der Polymerzusammensetzung, vorhanden ist und wobei der kombinierte Gewichtsprozentwert aller Komponenten 100 beträgt.

7. Die Polymerzusammensetzung nach einem der Ansprüche 1 bis 6, wobei das Laserdirektsrukturierungsadditiv in einer Menge im Bereich von 1 Gew.-% bis 10 Gew.-%, bezogen auf das Gesamtgewicht der Polymerzusammensetzung, vorhanden ist und wobei der kombinierte Gewichtsprozentwert aller Komponenten 100 beträgt.

8. Die Polymerzusammensetzung nach einem der Ansprüche 1 bis 7, wobei das Reflexionsadditiv in einer Menge im Bereich von 1 Gew.-% bis 10 Gew.-%, bezogen auf das Gesamtgewicht der Polymerzusammensetzung, vorhanden ist und wobei der kombinierte Gewichtsprozentwert aller Komponenten 100 beträgt.

9. Die Polymerzusammensetzung nach Anspruch 1 bis 8, die ferner ein oder mehrere zusätzliche Additive umfasst, die ein Antioxidationsmittel, einen Schlagzähmodifikator, ein Flammschutzmittel, einen anorganischen Füllstoff oder einen Stabilisator oder eine Kombination davon umfassen.

10. Die Polymerzusammensetzung nach einem der Ansprüche 1 bis 9, wobei die Polymerzusammensetzung einen Biegemodul gleich oder größer als 3 GPa aufweist.

11. Die Polymerzusammensetzung nach einem der Ansprüche 1 bis 10, wobei die Polymerzusammensetzung einen Zugmodul gleich oder größer als 3 GPa aufweist.

12. Die Polymerzusammensetzung nach einem der Ansprüche 1 bis 11, wobei die Polymerzusammensetzung einen Plattierungsindex im Bereich von 0,70 bis 1,50 aufweisen kann.

13. Ein Verfahren, umfassend:

    Bilden einer Polymerzusammensetzung, umfassend ein Polycarbonatpolymer, ein Laserdirektsrukturierungsadditiv, umfassend ein Kupfersalz, ein Reflexionsadditiv und einen verstärkenden Füllstoff, umfassend eine Flachglasfaser, die in einer Menge im Bereich von 10 Gew.-% bis 50 Gew.-%, bezogen auf das Gesamtgewicht der Polymerzusammensetzung, vorhanden ist; und

Aktivieren einer Oberfläche der gebildeten Polymerzusammensetzung unter Verwendung eines Lasers, um mindestens einen elementaren Metallkern freizusetzen, wobei die Polymerzusammensetzung in der Lage ist, nach dem Aktivieren unter Verwendung eines Lasers plattiert zu werden,

wobei die Polymerzusammensetzung in der Lage ist, einen Plattierungsindexwert mit einer statistischen Varianz von mindestens 55 % bis 85 % niedriger als derjenige zu haben, der für eine im Wesentlichen identische Referenzzusammensetzung in Abwesenheit des Reflexionsadditivs gemessen wurde

14. Das Verfahren nach Anspruch 13, ferner umfassend das Unterziehen von mindestens einem Teil der aktivierten Oberfläche der Polymerzusammensetzung einem Metallisierungsprozess, wobei der mindestens eine freigesetzte Metallkern als Katalysator für den Metallisierungsprozess fungiert.

15. Ein Gegenstand, der aus einer Polymerzusammensetzung nach einem der Ansprüche 1 bis 14 geformt ist.

16. Der Gegenstand nach Anspruch 15, wobei der Gegenstand eine Computervorrichtung, ein Haushaltsgerät, eine Dekorationsvorrichtung, eine elektromagnetische Interferenzvorrichtung, eine gedruckte Schaltung, eine Wi-Fi-Vorrichtung, eine Bluetooth-Vorrichtung, eine GPS-Vorrichtung, eine Mobilfunkantennenvorrichtung, eine Smartphone-Vorrichtung, eine Automobilvorrichtung, eine militärische Vorrichtung, eine Luft- und Raumfahrtvorrichtung, eine medizinische Vorrichtung, ein Hörgerät, eine Sensorvorrichtung, eine Sicherheitsvorrichtung, eine Abschirmvorrichtung, eine HF-Antennenvorrichtung oder eine RFID-Vorrichtung umfasst.

## Revendications

1. Composition de polymère comprenant :

un polymère de polycarbonate ;
un additif de structuration directe par laser comprenant un sel de cuivre, l'additif de structuration directe par laser étant capable d'être activé par un rayonnement électromagnétique et de former ainsi des noyaux métalliques élémentaires ;
un additif de réflexion, dans lequel la composition de polymère est capable d'être plaquée après avoir été activée en utilisant un laser, et
une charge de renforcement comprenant une fibre de verre plate présente en une quantité comprise entre 10 % en poids et 50 % en poids par rapport au poids total de la composition de polymère, et dans laquelle la valeur du pourcentage en poids combiné de tous les composants est de 100.

2. Composition polymère selon la revendication 1, dans laquelle le sel de cuivre comprend un phosphate d'hydroxyde de cuivre.

3. Composition polymère selon la revendication 1-2, dans laquelle l'additif de réflexion comprend de l'oxyde de titane, de l'aluminium élémentaire, de l'oxyde d'aluminium (III), de l'alumine monohydratée, de l'alpha-alumine, de l'alumine trihydratée, de la bauxite de roche, de la gibbsite, de la diaspora, de la boehmite, du corindon ou une combinaison de ceux-ci.

4. Composition polymère de l'une quelconque des revendications 1 à 3, dans laquelle le polymère polycarbonate comprend un polymère polycarbonate de bisphénol A.

5. Composition polymère selon la revendication 4, dans laquelle le polymère polycarbonate de bisphénol A comprend un mélange d'au moins deux polycarbonates de bisphénol A différents.

6. Composition polymère de l'une quelconque des revendications 1 à 5, dans laquelle le polymère polycarbonate est présent en une quantité comprise entre 10 % en poids et 90 % en poids par rapport au poids total de la composition polymère, et dans laquelle la valeur combinée en pourcentage en poids de tous les composants est de 100.

7. Composition de polymère de l'une quelconque des revendications 1 à 6, dans laquelle l'additif de structuration directe par laser est présent en une quantité comprise entre 1 % en poids et 10 % en poids par rapport au poids total de la composition de polymère, et dans laquelle la valeur du pourcentage en poids combiné de tous les composants est de 100.

8. Composition de polymère de l'une quelconque des revendications 1 à 7, dans laquelle l'additif de réflexion est présent en une quantité comprise entre 1 % en poids et 10 % en poids par rapport au poids total de la composition de polymère, et dans laquelle la valeur du pourcentage en poids combiné de tous les composants est de 100.

9. Composition polymère de la revendication 1 à 8, comprenant en outre un ou plusieurs additifs supplémentaires comprenant un antioxydant, un modificateur d'impact, un retardateur de flamme, une charge inorganique ou un stabilisateur, ou une combinaison de ceux-ci.

10. Composition de polymère selon l'une quelconque des revendications 1 à 9, dans laquelle la composition de polymère présente un module de flexion égal ou supérieur à 3 GPa.

11. Composition de polymère selon l'une quelconque des revendications 1 à 10, dans laquelle la composition de polymère présente un module de de traction égal ou supérieur à 3 GPa.

12. Composition polymère de l'une quelconque des revendications 1 à 11, dans laquelle la composition polymère peut présenter un indice de placage dans la gamme de 0,70 à 1,50.

13. Une méthode comprenant:

la formation d'une composition polymère comprenant un polymère polycarbonate, un additif de structuration directe par laser comprenant un sel de cuivre, un additif de réflexion, et une charge de renforcement comprenant une fibre de verre plate présente en une quantité comprise entre 10 % en poids et 50 % en poids par rapport au poids total de la composition polymère ; et
l'activation d'une surface de la composition polymère formée en utilisant un laser pour libérer au moins un noyau métallique élémentaire, dans lequel la composition polymère est capable d'être plaquée après avoir été activée en utilisant un laser,
dans lequel la composition polymère est capable d'avoir une valeur d'indice de plaquage avec une variance statistique d'au moins 55 % à 85 % inférieure à celle mesurée pour une composition de référence sensiblement identique en l'absence de l'additif de réflexion.

14. Procédé de la revendication 13, comprenant en outre la soumission d'au moins une partie de la surface activée de la composition polymère à un processus de métallisation, dans lequel le au moins un noyau métallique libéré agit comme un catalyseur pour le processus de métallisation.

15. Article comprenant la composition de polymère de l'une quelconque des revendications 1-14.

16. Article de la revendication 15, dans lequel l'article comprend un dispositif informatique, un appareil ménager, un dispositif de décoration, un dispositif d'interférence électromagnétique, un circuit imprimé, un dispositif Wi-Fi, un dispositif Bluetooth, un dispositif GPS, un dispositif d'antenne cellulaire, un dispositif de téléphone intelligent, un dispositif automobile, un dispositif militaire, un dispositif aérospatial, un dispositif médical, une prothèse auditive, un dispositif de capteur, un dispositif de sécurité, un dispositif de blindage, un dispositif d'antenne RF, ou un dispositif RFID.

Figure 1

Figure 2

Figure 3

**EP 3 074 458 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130168133 A
- US 7786246 B